# EUROPEAN PATENT APPLICATION

(11) **EP 1 883 061 A2**
(43) Date of publication of application: **30.01.2008**
(21) Application number: 07014311.0
(22) Date of filing: 20.07.2007
(51) Int. Cl.: G09G 3/36

(54) **Liquid crystal display**

(30) Priority: 25.07.2006 KR 20060069647
(71) Applicant: Samsung Electronics Co., Ltd., Suwon-si 442-742 Gyeonggi-do (KR)
(72) Inventor: Moon, Seung-Hwan, Sanghyeon-dong Yongin-si Gyeonggi-do (KR)
(74) Representative: Weitzel, Wolfgang

(57) **Abstract**

A liquid crystal display includes a plurality of pixels arranged in a matrix, a substrate, and a plurality of gate lines, data lines, thin film transistors, pixel electrodes, and storage electrode lines. The gate lines are formed on the substrate. The data lines run crosswise relative to the gate lines above or below the gate lines, and the thin film transistors are connected to the gate lines and the data lines. The pixel electrodes are connected to the thin film transistors, and have a first side formed in parallel with the gate lines and a second side shorter than the first side and adjacent to the first side. The storage electrode lines overlap with the pixel electrodes. Storage electrode signals applied to the storage electrode lines are periodic alternating signals.

## Description

### CROSS-REFERENCE TO RELATED APPLICATION

This application claims priority to and the benefit of Korean Patent Application No. 10-2006-0069647 filed in the Korean Intellectual Property Office on July 25, 2006, the entire contents of which are incorporated herein by reference.

### BACKGROUND OF THE INVENTION

### (a) Field of the Invention

The present invention relates to liquid crystal displays.

### (b) Description of the Related Art

A liquid crystal display is one of the most widely used types of flat panel displays. A liquid crystal display includes two display panels having field-generating electrodes such as pixel electrodes and a common electrode, and a liquid crystal layer interposed between the panels. The liquid crystal display induces an electric field on a liquid crystal layer by applying voltages to the field generating electrodes. The electric field determines the alignment of liquid crystal molecules in the liquid crystal layer, and this alignment controls the polarization of incident light so as to form an image.

The liquid crystal display also includes a plurality of signal lines such as gate lines and data lines which control switching elements connected to the pixel electrodes so as to supply suitable voltages to the pixel electrodes.

A gate driving circuit and a data driving circuit are directly mounted on a display panel as a plurality of IC chips. Alternatively, the gate driving circuit and data driving circuit are mounted on a flexible printed circuit film and the flexible printed circuit film is attached to a display panel. Such ICs are responsible for a large share of the manufacturing cost of a liquid crystal display. It is therefore desirable to reduce the number of such ICs. A data driver IC is more expensive than a gate driving circuit IC, and therefore it is particularly desirable to reduce the number of the data driver ICs, especially in large liquid crystal displays having high resolution. The manufacturing cost of the gate driving circuit can be reduced by integrating the gate driving circuit with a display panel together with the gate lines, the data lines, and the switching elements. However, it is difficult to integrate the data driving circuit with display panel because the data driving circuit has a complicated structure. Therefore, a reduction of the number of data driver ICs is needed.

The power consumption increases if a driving voltage of the data driving circuit is increased, and the heat generated by the data driving circuit increases as a square of the driving voltage. The data driving circuit may be damaged by excessive heat. It is therefore desirable to reduce the number of data driving circuit chips, and also to reduce the driving voltage of the data driving circuit.

### SUMMARY

Some embodiments of the present invention have been made in an effort to provide a liquid crystal display having advantages of reducing the cost of data driving circuit IC chips and reducing a driving voltage of a data driving circuit. An exemplary embodiment of the present invention provides a liquid crystal display including a substrate, and a plurality of gate lines formed on the substrate, data lines, thin film transistors, pixel electrodes, and storage electrode lines. The gate lines are formed on the substrate. The data lines are arranged crosswise relative to the gate lines, and the thin film transistors are connected to the gate lines and the data lines. The pixel electrodes are connected to the thin film transistors, and each pixel electrode has a first side formed in parallel with the gate lines and a second side shorter than the first side and adjacent to the first side. The storage electrode lines overlap with the pixel electrodes. In the liquid crystal display, a storage electrode signal applied to a storage electrode line is a periodic alternating signal.

The storage electrode signals applied to adjacent storage electrode lines may be opposite in phase.

The storage electrode lines may be substantially parallel to the data lines.

The storage electrode lines may be made of the same layer of material as the data lines.

Each storage electrode line may be adjacent to one or more of the gate lines and may have at least one of branch parallel to the gate lines.

The first side of each pixel electrode may be three times longer than the second side.

The liquid crystal display may further include a gate driver connected to the gate lines, wherein the gate driver may be located on the substrate.

The gate driver may include a first gate driver connected to a first group of the gate lines and the second gate driver connected to a second group of the gate lines.

The first gate driver and the second gate driver may be placed at opposite sides of the substrate.

Thin film transistors adjacent in a column direction may be connected to different data lines.

Thin film transistors adjacent in a column direction may be connected to the different data lines in every two rows.

The liquid crystal display may include a data driver connected to the data lines, and may include a plurality of additional wires, and the storage electrode signals may be transferred through the additional wires.

The liquid crystal display may further include a storage electrode signal supply line connecting the additionalwires. The storage electrode lines may be parallel to the gate lines.

The storage electrode signals may be reversed every frame.

Polarities of data voltages flowing on adjacent data lines may be opposite to each other.

Polarities of data voltages on adjacent data lines may be the same.

Another embodiment of the present invention provides a liquid crystal display including a matrix of pixels, gate lines, and data lines. The data lines are arranged crosswise relative to the gate lines. In the liquid crystal display, each of the pixels includes a liquid crystal capacitor and a storage capacitor. The storage capacitor has a first terminal connected to the liquid crystal capacitor and a second terminal receiving a storage electrode signal that is a periodic alternating signal. In the liquid crystal display, wherein a region defined by the gate lines and the data lines has a first side extending along the gate lines that is longer than a second side extending along the data lines.

The first side may be three times longer that the second side.

The voltage of the liquid crystal capacitor may change according to oscillations of the storage electrode signal.

Another embodiment of the present invention provides a method for operating a liquid crystal display. The method comprises providing signals to a plurality of gate lines of the liquid crystal display which are formed on a substrate. The method may comprise providing signals to a plurality of data lines of the liquid crystal display which are arranged crosswise relative to the gate lines and are connected to the gate lines via a plurality of thin film transistors, the thin film transistors being connected to a plurality of pixel electrodes of the liquid crystal display, the pixel electrodes each having a first side formed in parallel with the gate lines and a second side shorter than the first side and adjacent to the first side, The method may include providing periodic alternating voltages to a plurality of storage electrode lines overlapping with the pixel electrodes.

### BRIEF DESCRIPTION OF THE DRAWINGS

FIG. 1 is a block diagram illustrating a liquid crystal display according to an exemplary embodiment of the present invention.
FIG. 2 is an equivalent circuit diagram illustrating a liquid crystal display device according to an exemplary embodiment of the present invention.
FIG. 3 is a schematic diagram illustrating pixel polarities and the arrangement of switching elements in a liquid crystal panel assembly according to an exemplary embodiment of the present invention.
FIG**.** 4 is a layout view of a lower panel for a liquid crystal panel assembly according to an exemplary embodiment of the present invention.
FIG. 5 is a layout view of an upper panel for a liquid crystal panel assembly according to an exemplary embodiment of the present invention.
FIG. 6 is a layout view illustrating a liquid crystal panel assembly formed of the lower panel shown in FIG. 4 and the upper panel shown in FIG. 5.
FIG. 7 and FIG. 8 are cross-sectional views of the liquid crystal panel assembly shown in FIG. 6 which are taken along the lines VII-VII and VIII-VIII respectively.
FIG. 9A and FIG. 9B are waveforms showing signals in a liquid crystal display in respective two consecutive frames according to an exemplary embodiment of the present invention.
FIG. 10 is a perspective view of a liquid crystal panel assembly and a data driver according to an exemplary embodiment of the present invention.
FIG. 11 is a schematic diagram illustrating pixel polarities and the arrangement of switching elements in a liquid crystal panel assembly according to an exemplary embodiment of the present invention.
FIG. 12 is a layout view of a liquid crystal panel according to another exemplary embodiment of the present invention.

### DESCRIPTION OF SOME EMBODIMENTS

Below, exemplary embodiments of the present invention are described with reference to the accompanying drawings. As those skilled in the art will realize, these exemplary embodiments may be modified in different ways, all without departing from the spirit or scope of the present invention.

In the drawings, the thickness of layers, films, panels, regions, etc., is exaggerated for clarity. Like reference numerals designate like elements throughout the specification. It will be understood that when an element such as a layer, a film, a region, or a substrate is referred to as being "on" another element, this can mean "directly on" or intervening elements may be present. In contrast, when an element is referred to as being "directly on" another element, there are no intervening elements present.

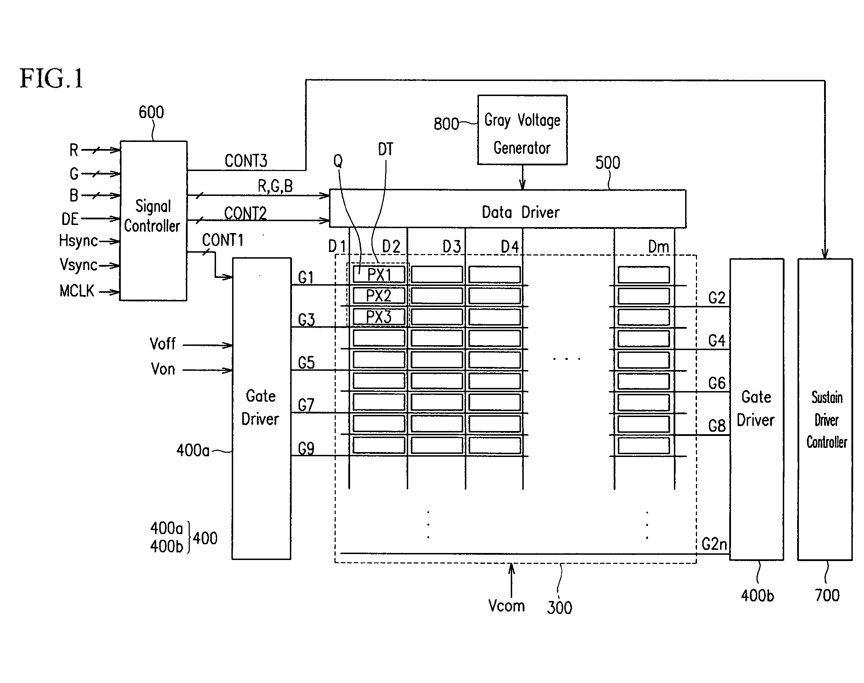

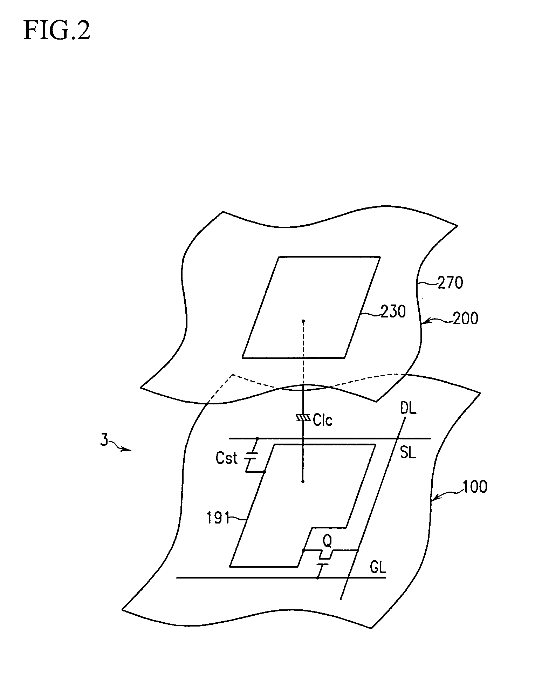

A liquid crystal display according to one exemplary embodiment of the present invention will now be described with reference to FIG. 1 and FIG. 2. FIG. 1 is a block diagram of the liquid crystal display, and FIG. 2 is an equivalent circuit diagram illustrating a pixel of the liquid crystal display.

Referring to FIG. 1 and FIG. 2, the liquid crystal display includes a liquid crystal panel assembly 300. Connected to the assembly 300 are a pair of gate drivers 400a and 400b and a data driver 500. Also shown are a storage electrode driving unit 700, a gray voltage generator 800 which is connected to the data driver 500, and a signal controller 600 for controlling the circuits 400a, 400b, 500, 700, and 800.

The liquid crystal panel assembly 300 includes a plurality of display signal lines and a matrix of pixels PX (such as pixels PX1, PX2, and PX3) connected to the display signal lines. A liquid crystal layer 3 is interposed between lower and upper panels 100 and 200 facing each other as shown in FIG. 2.

The display signal lines include gate lines G₁-Gₙ for providing a gate signal (which is a scanning signal) and data lines D₁-Dₘ for carrying data signals. The gate lines G₁-Gₙ extend in approximately a row direction in parallel with each other, and the data lines D₁-Dₘ extend in approximately a column direction in parallel with each other.

Each pixel PX is elongated in the row direction. Each pixel PX is connected to a respective data line (DL), which is one of lines D₁-Dₘ, through a respective switching element Q. The element Q is connected to a respective gate line (GL), which is one of lines G₁-Gₘ. Each pixel PX is associated with a liquid crystal capacitor Clc and a storage capacitor Cst. The storage capacitor Cst is omitted in some embodiments.

The switching element Q is a three-terminal element such as a thin film transistor. The switching element Q is disposed on the lower panel 100. The switching element Q includes a control terminal connected to the respective gate line (GL), an input terminal connected to the respective data line (DL), and an output terminal connected to the respective liquid crystal capacitor Clc and storage capacitor Cst.

The liquid crystal capacitor Clc has one terminal provided by the corresponding pixel electrode 191 on the lower panel 100, the other terminal provided by a common electrode 270 of the upper panel 200, and capacitor dielectric provided by the liquid crystal layer 3 between the electrodes 191 and 270. The pixel electrode 191 is connected to the switching element Q. The common electrode 270 occupies the entire surface of the upper panel 200 and receives a common voltage Vcom. As an alternative to the structure shown in FIG. 2, the common electrode 270 can be formed on the lower panel 100. In this case, at least one of two electrodes 191 and 270 can be shaped as a line or a rod.

The storage capacitor Cst functions as an auxiliary to liquid crystal capacitor Clc. The storage capacitor Cst is provided by a storage electrode line (SL) overlapping with the pixel electrode 191 and insulated from the pixel electrode by an insulator.. Alternatively, the storage capacitor Cst can be provided by the pixel electrode 191 overlapping with the gate line of the adjacent row, with an insulator between the pixel electrode and the gate line.

In order to provide color display, each pixel PX displays a unique primary color (spatial division), or each pixel PX alternately displays different primary colors at different times (temporal division). A desired color is generated as a spatial or temporal sum of the primary colors. The primary colors could be red, green and blue. FIG. 2 shows a color filter 230 arranged to provide one of the primary colors. Color filter 230 is arranged on a region of upper panel 200 corresponding to a pixel electrode 191 of a respective one of pixels PX (for example, one of pixels PX1, PX2, PX3) in the case of spatial division. In other embodiments, color filter 230 is formed on lower panel 100 above or below the respective pixel electrode 191. In some embodiments, color filters 230 of adjacent pixels in each row are contiguous, i.e. in physical contact with each other, for the same color. Color filters 230 for different colors alternate in the column direction.

It will be assumed for the embodiment being described that each color filter 230 displays a unique color of red, green, or blue (the invention is not limited to such embodiments however). A red pixel is a pixel with a red color filter 230, a green pixel is a pixel with a green color filter 230, and a blue pixel is a pixel with a blue color filter 230. In each column, the pixels alternate as red, green, blue, red, etc. Three consecutive pixels, such as PX1- PX3, of three primary colors form one dot (DT) as a basic unit of image display.

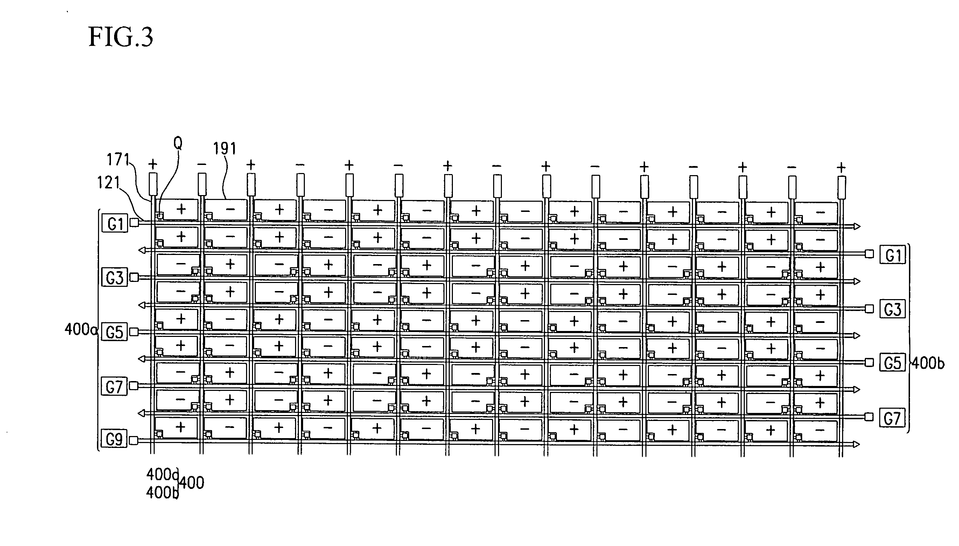

Now a liquid crystal panel assembly according to an exemplary embodiment of the present invention will be described in detail with reference FIGs. 3-8. FIG. 3 is a schematic diagram illustrating the pixel polarities and the location of switching elements Q in a liquid crystal panel assembly according to the exemplary embodiment. The voltages on any two adjacent data lines 171 have opposite polarities. One of the polarities is positive (+), and the other polarity is negative (-).

In each column, the location of switching element Q changes every two rows. The switching elements Q are connected to one of the adjacent data lines 171 in two rows, then to the other one of lines 171 in the next two rows, and so on. Hence, if data driver 500 supplies data voltages of opposite polarities to adjacent data lines 171 (column inversion) and the polarities remain constant for one frame, then the polarities of pixel voltages of the adjacent pixels alternate both in each row (at each pixel) and in each column (every two pixels). Therefore, the apparent inversion as shown on the screen is 2× 1 dot inversion.

Besides the frame inversion, the data driver 500 inverts the polarity of the data voltage flowing through adjacent data lines D₁-Dₘ in one frame. Accordingly, the polarity of a data voltage supplied therefrom changes. As shown in FIG. 3, since the connection on the pixel and the data lines D₁-Dₘ changes in every pixel row, the polarity inversion (driver inversion) pattern in the data driver 500 and the polarity inversion (apparent inversion) pattern of the pixel voltage shown in the screen of the liquid crystal panel assembly 300 appear differently. That is, although the driver inversion is column inversion, the apparent inversion becomes a 2x 1 dot inversion.

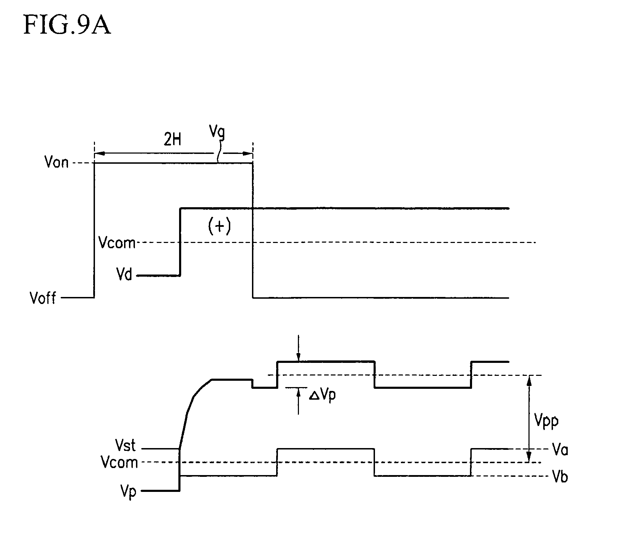

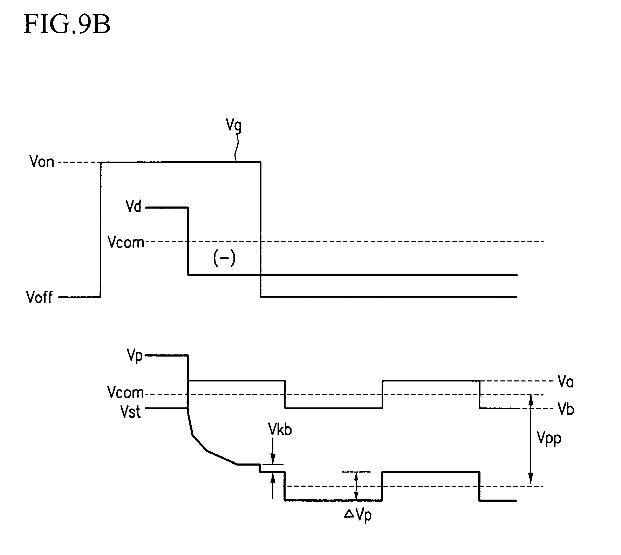

If the apparent inversion is dot inversion as described above, the luminance variations generated by the kick-back voltages (described below with reference to FIGs. 9A, 9B) tend to cancel each other in each column. Therefore, flicker in each column can be suppressed. Since the driver inversion is column inversion, the voltage polarities on data lines D₁-Dₘ are unchanged for an entire frame period. Therefore, the resolution or the frame frequency can be increased, and the pixel charge increases.

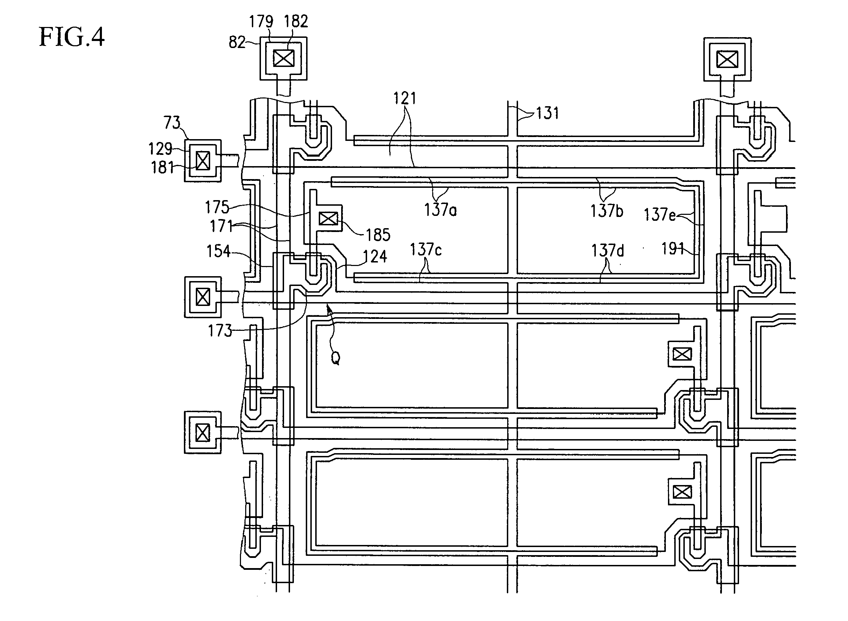

Now a liquid crystal panel assembly according to an exemplary embodiment of FIG. 3 will be described in detail with reference to FIGs. 4-8.

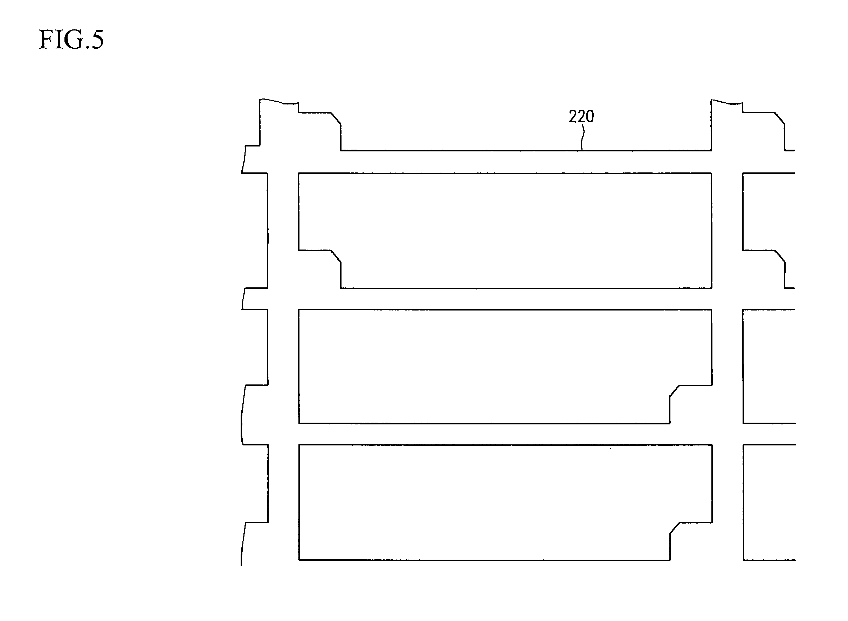

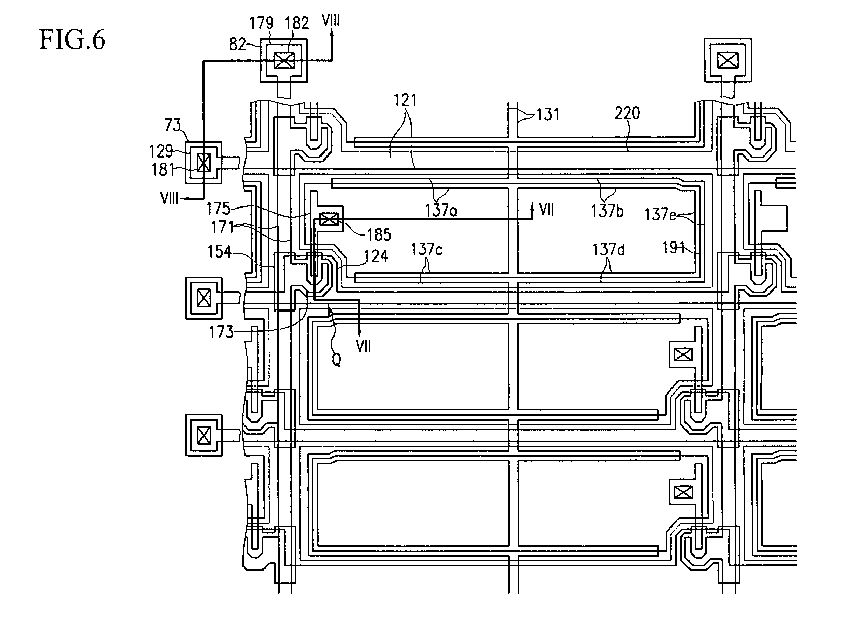

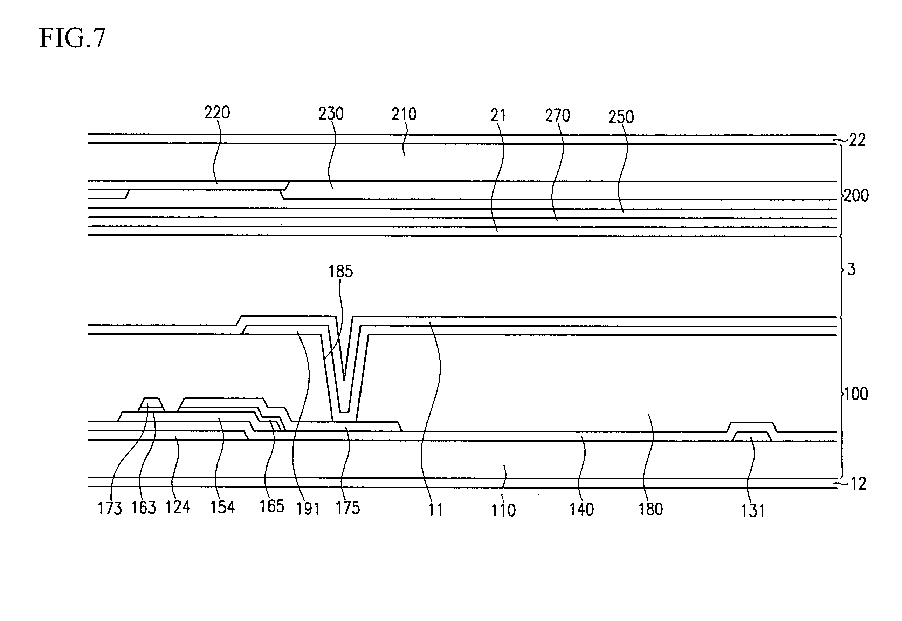

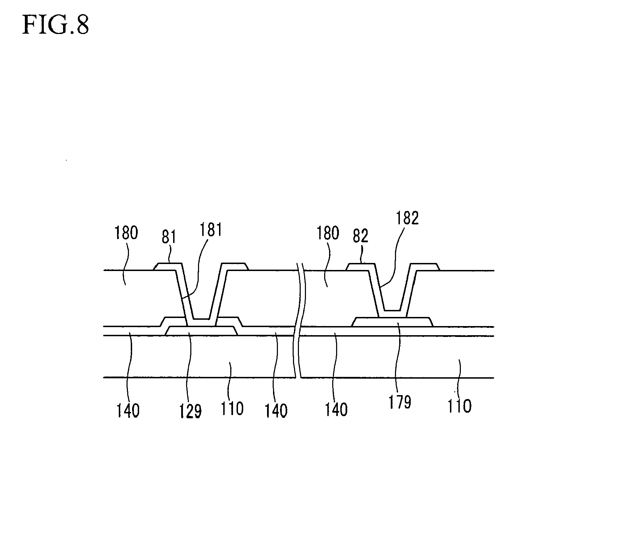

FIG. 4 is a layout view illustrating the lower panel for the liquid crystal panel assembly according to the exemplary embodiment, FIG. 5 is a layout view illustrating the upper panel of the liquid crystal panel assembly according to the exemplary embodiment, and FIG. 6 is a layout view showing the liquid crystal panel assembly formed with the lower panel of FIG. 4 and the upper panel of FIG. 5. FIG. 7 and FIG. 8 are cross-sectional views of the liquid crystal panel assembly of FIG. 6 that are taken respectively along the lines VII-VII and VIII-VIII.

FIGs. 4-8 show the lower panel 100, the upper panel 200, and the liquid crystal layer 3 interposed between the display panels 100 and 200.

First, the lower panel 100 will be described.

A plurality of gate lines 121 are formed on an insulating substrate 110 made of transparent glass or plastic. The gate lines 121 transfer a gate signal and basically extend in the horizontal (row) direction. Each gate line 121 includes a plurality of gate electrodes 124 protruding upwardly and downwardly, and a widened contact area 129 at the end for contacting other layers or an external driving circuit.

The gate lines 121 can be made of an aluminum group metal such as aluminum (Al) or an aluminum alloy, of a silver group metal such as silver (Ag) or a silver alloy, of a copper group metal such as copper (Cu) or a copper alloy, of a molybdenum group metal such as molybdenum (Mo) or a molybdenum alloy, or of chromium (Cr), tantalum (Ta), or titanium (Ti). Gate lines 121 can also be a multi-layer structure having two conductive layers (not shown) with different physical properties. One of the two conductive layers can be a metal having low resistivity in order to reduce signal delay or voltage drop. Examples include aluminum group metals, silver group metals, and copper group metals. The other conductive layer can be a different material which has excellent physical and chemical characteristics and which is suitable for making good electrical contact with ITO (indium tin oxide) and/or IZO (indium zinc oxide). Examples include molybdenum group metals, chromium, tantalum, and titanium. For example, such a structure can have a lower layer of chromium and an upper layer of aluminum or aluminum alloy, or a lower layer of aluminum or aluminum alloy and an upper layer of molybdenum or molybdenum alloy. However, the gate lines 121 can be made of other metals or other conductive materials besides the materials described above.

It is desirable that the gate lines 121 have sloped sidewalls, and the sidewall angle be in a range of about 30° to about 80° relative to the substrate 110.

A gate insulating layer 140 made of silicon nitride (SiNx) or silicon oxide (SiOx) is formed on the gate lines 121.

A plurality of semiconductor islands 154 made of hydrogenated amorphous silicon (a-Si) or polysilicon are formed on the gate insulating layer 140. A semiconductor island·154 is placed over each gate electrode 124.

A plurality of ohmic contact islands (ohmic contacts) 163 and 165 are formed on the semiconductor islands 154. Ohmic contacts 163 and 165 are made of n+ hydrogenated amorphous silicon heavily doped with n-type impurity such as phosphorus, or they can be made of a silicide. A pair of ohmic contacts 163 and 165 is provided on each semiconductor island 154.

The semiconductor islands 154 and the ohmic contacts 163 and 165 have sloped sidewalls. The sidewall angle is in a range of about 30° to about 80° relative to the substrate 110.

The data lines 171, a plurality of drain electrodes 175, and a plurality of storage electrode lines 131 are formed over the ohmic contacts 163 and 165 and the gate insulating layer 140.

The data lines 171 carry data signals and basically extend in the vertical (column) direction, passing over the gate lines 121. Each data line 171 includes a plurality of source electrodes 173 extending toward the gate electrodes 124, and also includes a widened contact area 179 at the end for contacting other layers or an external driving circuit. The data driving circuit (not shown) generating the data signals can be mounted on a flexible printed circuit film (not shown) attached to the substrate 110, or can be mounted directly on the substrate 110, or can be integrated with the substrate 110. When the data driving circuit is integrated with the substrate 110, the data lines 171 can have extensions to directly connect to the data driving circuit.

Drain electrodes 175 are spaced from the data lines 171. Each drain electrode 175 is part of a transistor which includes a gate electrode 124 and also includes a source electrode 173 facing the drain electrode 175. Each drain electrode 175 includes rod-shaped end. The rod shaped end of the drain electrode 175 is partially surrounded by the U shaped source electrode 173. The source electrode 173 and the drain electrode 175 are approximately bilaterally symmetrical.

One gate electrode 124, one semiconductor island 154, one source electrode 173, and one drain electrode 175 form a thin film transistor (TFT). The channel of the thin film transistor is located between the source electrode 173 and the drain electrode 175 in the semiconductor island 154.

Each storage electrode line 131 includes a stem running parallel to the data lines 171 and also includes a plurality of first to fourth storage electrodes 137a, 137b, 137c and 137d branching therefrom. A set of first to fourth storage electrodes 137a-d is provided at each pixel electrode 191. At each pixel electrode 191, the corresponding first to fourth storage electrodes 137a-d extend from the stem on two opposite sides in parallel and adjacent to the adjacent gate lines 121. The second and fourth storage electrodes 137b and 137d are interconnected by a junction storage electrode 137e, which is parallel to the data lines. Other shapes and arrangements can also be used for the storage electrode lines 131.

It is desirable that the data lines 171, the drain electrodes 175, and the storage electrode lines 131 be made of a layer of a refractory metal such as molybdenum, chromium, tantalum, titanium, and/or their alloys, and/or have a multi-layer structure including a refractory metal layer (not shown) and a low-resistivity conductive layer (not shown). For example, a dual-layer structure can be used and can include a lower layer of chromium, molybdenum, or their alloys and an upper layer of aluminum or its alloy. Some embodiments use a triple-layer structure which includes a lower layer of molybdenum or its alloy, the middle layer of aluminum or its alloy, and an upper layer of molybdenum or its alloy. The data lines 171, the drain electrodes 175, and the storage electrode lines 131 can also be made of other metal and/or non-metal conductive materials.

It is desirable that the data lines 171, the drain electrodes 175, and the storage electrode lines 131 have sloped sidewalls, and the sidewall angle be in a range of about 30° to about 80° relative to the substrate 110.

The ohmic contacts 163 and 165 are only present between the semiconductor islands 154 disposed thereunder and the data line 171 and drain electrode 175 disposed thereover. The ohmic contacts 163 and 165 reduce the contact resistance between islands 154 on the one hand and the data lines 171 and drain electrodes 175 on the other hand. Each semiconductor island 154 includes a region ("first region") not covered by a data line 171 and not covered by a drain electrode 175, that first region lying between the source electrode 173 and the drain electrode 175.

A passivation layer 180 is formed on the data lines 171, the drain electrodes 175 and the uncovered portions of the semiconductor islands 154. The passivation layer 180 is made of an inorganic insulator such as silicon nitride or silicon oxide. The passivation layer 180 can be made of an organic insulator, and may have a planar top surface. In the case of the organic insulator, the passivation layer 180 can be photosensitive, and it is desirable that the dielectric constant thereof be less than about 4.0. The passivation layer 180 can have a dual-layer structure to include a lower inorganic layer and an upper organic layer at least over the first regions of the semiconductor islands 154, in order to obtain the inorganic layer's excellent insulating characteristics while at the same avoiding damage to the first regions of the semiconductor islands 154.

A plurality of contact holes 182 and 185 are formed in the passivation layer 180 to expose the contact areas 179 of the data lines 171 and the widened contact areas 177 of the drain electrodes 175, and a plurality of contact holes 181 are formed in the passivation layer 180 and the gate insulating layer 140 to expose the contact areas 129 of the gate lines 121.

Pixel electrodes 191 and contact liners 81 and 82 are formed over the passivation layer 180. They can be made of a transparent conductive material such as ITO or IZO, or a reflective metal such as aluminum, silver, chromium, or an alloy thereof.

Each pixel electrode 191 has four sides two of which extend in about the row direction, and are about parallel to gate lines 121, and the other two of which extend in about the column direction, and are about parallel to data lines 171. The row-direction sides are longer than the column-direction sides. In some embodiments, the row-direction sides are three times longer than the column-direction sides. Therefore, compared to similarly-sized LCDs having pixel electrodes whose row-direction sides are shorter than the column-direction sides, the number of pixel electrodes 191 per column can be decreased and the number of pixel electrodes 191 per row can be increased. Therefore, the overall number of data lines 171 is reduced, and the manufacturing cost can be reduced by reducing the number of IC chips in the data driver 500. Although the number of gate lines 121 increases, this is not a substantial problem because the gate drivers 400a and 400b can be integrated with the assembly 300 which includes gate lines 121, data lines 171, and the thin film transistors. Even if the gate drivers 400a and 400b are not integrated but are provided as IC chips, it is more economical to reduce the number of the IC chips for the data driver 500 because the price per IC chip for the gate drivers 400a and 400b is lower.

Each pixel electrode 191 is physically and electrically connected to the respective drain electrode 175 through the respective contact hole 185. The pixel electrode 191 receives a data voltage from the drain electrode 175. The data voltage on the pixel electrode 191 and the common voltage supplied to the common electrode 270 on common electrode panel 200 induce an electric field which determines the orientation of the liquid crystal molecules of the liquid crystal layer 3 between the electrodes 191 and 270. This orientation determines polarization of the light passing through the liquid crystal layer 3. The pixel electrode 191 and the common electrode 270 form a liquid crystal capacitor which sustains its voltage after the respective thin film transistor is turned off.

The pixel electrode 191 overlaps with a respective storage electrode line 131 and, in particular, the respective storage electrodes 137a-e, thereby forming a storage capacitor that enhances a voltage sustaining capability of the liquid crystal capacitor. More particularly, the stem of the storage electrode line 131 runs in the column direction over the center portion of the pixel electrode 191. The boundary of the pixel electrode 191 adjacent to the gate lines 121 is overlapped by the storage electrodes 137a-d extending on both sides from the stem line in the row direction. In this configuration, electromagnetic interference between the pixel electrode 191 and the respective the gate line 121 is blocked by the storage electrodes 137a-e, thereby stably sustaining the voltage on the pixel electrode 191. The resulting structure needs less wiring in the column direction compared to a structure with storage electrodes 137a-d being disposed near the pixel electrode's boundary adjacent to the data lines. Therefore, the pixel width in the row direction can be reduced, leaving more room for integrating the gate drivers 400a and 400b. The storage electrodes 137a-e also block light leakage between the pixel electrodes 191. The step profile caused by the presence of the stem of the storage electrode line 131 in the middle of the pixel electrode 191 can be made smoothened using greater inclination of the sidewalls of the storage electrode line 131.

Each contact liner 82 contacts the respective contact area 179 of the respective data line 171 through the respective contact hole 182. The contact liners 82 enhance adhesion between the contact areas 179 and an external device, and protect the contact areas 179.

Each contact liner 81 contacts the respective contact area 129 of the respective gate line 121 through the respective contact hole 181, thus connecting the contact area 129 to the gate driver 400. If the gate driver 400 is formed of 1C chips, the contact liners 81 may have a similar shape and function to the contact liners 82.

Now the upper panel 200 will be described. A light blocking member 220 is formed on an insulating substrate 210 made of transparent glass or plastic to block light leakage. The light blocking member 220 is also called a black matrix.

The color filters 230 are formed on the substrate 210 and the light blocking member 220. Most of each color filter 230 is located in a region surrounded by the light blocking member 220. Each color filter 230 extends longitudinally along a pixel electrode 191. Each of the color filters 230 is of a primary color of red, green, or blue.

An overcoat 250 is formed on the color filters 230 and the light blocking member 220. The overcoat 250 can be made of an organic insulator. The overcoat 250 protects the color filters 230 from being exposed and provides a flat surface. The overcoat 250 can be omitted.

Alignment layers 11 and 21 are coated on the inside surfaces of the display panels 100 and 200, and they can be vertical alignment layers. Polarizers 12 and 22 are provided at the outer surfaces of the display panels 100 and 200, and the polarization axes of the two polarizers can be parallel or at an angle to each other. In the case of a reflective liquid crystal display, one of the polarizers can be omitted.

The liquid crystal display according to the present exemplary embodiment can further include a phase retardation film (not shown) to correct for the retardation in the liquid crystal layer 3. The liquid crystal display may also include a lighting unit for providing light to the liquid crystal layer 3.

The liquid crystal layer 3 has positive or negative dielectric anisotropy, and the liquid crystal molecules of the liquid crystal layer 3 are arranged to have longitudinal axes to be parallel with or orthogonal to the surface of the display panels 100 and 200 when no electric field is applied.

Referring again to FIG. 1, the gate drivers 400a and 400b are integrated at the liquid crystal panel assembly 300 with the signal lines G₁-Gₙ and D₁-Dₘ and thin film transistor switching elements Q. Drivers 400a, 400b are placed respectively at the right and left sides of the liquid crystal panel assembly 300. The gate drivers 400a and 400b are alternately connected to the odd-numbered gate lines and the even-numbered gate lines, respectively, and supply gate signals each of which alternates as a gate-on voltage Von and a gate-off voltage Voff. The gate drivers 400a and 400b supply the gate signals to the gate lines (G₁-Gₙ). In other embodiments, the gate drivers 400a and 400b are both located on one side of the liquid crystal panel assembly 300.

At least one polarizer (not shown in Fig. 1) is attached at the outer surface of the liquid crystal panel assembly 300 for polarizing light.

The gray voltage generator 800 generates two sets of gray voltages (or reference sets of gray voltages) related to the transmittance of the pixels PX. One of the two sets has positive polarity relative to the common voltage Vcom, and the other set negative polarity.

The data driver 500 is connected to the data lines D₁-Dₘ of the liquid crystal panel assembly 300. The data driver 500 selects the gray voltages from the voltages provided by the gray voltage generator 800, and supplies the selected gray voltages as data signals to the data lines D₁-Dₘ. If the gray voltage generator 800 supplies a predetermined number of reference gray voltages without supplying all the gray voltages needed, the data driver 500 generates the gray voltages needed by dividing the reference gray voltages and selects a number of the generated gray voltages as data signals.

Storage electrode driver 700 is connected to the storage electrode lines SL of the liquid crystal panel assembly 300, and supplies alternating, periodic storage electrode voltages to the storage electrode lines SL.

The signal controller 600 controls the gate drivers 400a and 400b and the data driver 500.

Each of the drivers 400, 500, 600, 700, and 800 may be directly mounted on the liquid crystal panel assembly 300 as one or more IC chips. The drivers 400, 500, 600, 700 and 800 can alternatively be mounted on a flexible printed circuit film (not shown), and the flexible printed circuit film can be attached to the liquid crystal panel assembly 300 using a tape carrier package (TCP). In other embodiments, the drivers 400, 500, 600, 700, 800 are mounted on a printed circuit board (PCB) (not shown). In another alternative, the drivers 400, 500, 600, 700, and 800 can be integrated with the liquid crystal panel assembly 300, the signal lines G₁-Gₙ, D₁-Dₘ, SL, and the thin film transistor switching elements Q. The drivers 400, 500, 600, 700, and 800 can also be integrated in a single chip. In another alternative, the drivers may include a single chip plus one or more discrete circuit elements formed outside of the chip.

Now the operation of the liquid crystal display according to the present embodiment will be described in detail.

Signal controller 600 receives, from an external graphics controller (not shown), input image signals R, G, and B and an input control signal for displaying the input image signals R, G, and B. The input image signals R, G, and B include luminance information for each pixel PX. The luminance can have a predetermined number of values, for example, 1024 values (i.e. 2¹⁰), or 256 values (i.e. 2⁸) or 64 values (i.e. 2⁶). The input control signal may include a vertical synchronization signal Vsync, a horizontal synchronizing signal Hsync, a main clock signal MCLK, and a data enable signal DE.

The signal controller 600 processes the input image signals R, G, and B as appropriate for the operating conditions of the liquid crystal panel assembly 300, and generates from the input image signals R, G, and B and the input control signal, a gate control signal CONT1, a data control signal CONT2, a storage electrode control signal CONT3, and image signals DAT. Then, the signal controller 600 outputs the gate control signal CONT1 to the gate drivers 400a and 400b and outputs the data control signal CONT2 and image signals DAT to the data driver 500. Also, the signal controller 600 outputs the storage electrode control signal CONT3 to the storage electrode driver 700. The signal controller arranges the input image signals R, G, and B according to the pixel arrangement shown in FIG. 1.

The gate control signal CONT1 includes a scanning start signal STV to initiate scanning, and at least one clock signal for controlling the output cycle of the gate-on voltage (Von). The gate control signal CONT1 can further include an output enable signal OE that limits the duration of the gate-on voltage (Von).

The data control signal CONT2 includes a horizontal synchronization start signal STH to initiate transmission of digital image signals DAT for all the columns for one row of pixels, and a load signal (LOAD) and a data clock signal HCLK to initiate driving of analog data signals on the data lines D₁-Dₘ. The data control signal CONT2 can further include an inversion signal RVS that inverts the voltage polarity of the analog data signals relative to the common voltage Vcom. Hereinafter, "data signal polarity" denotes the voltage polarity of a data signal relative to the common voltage.

The data driver 500 receives the digital image signals DAT for one row for all the columns of pixels, and converts the digital image signals DAT to analog data signals by selecting gray voltages corresponding to each digital image signal DAT according to the data control signal CONT2 from the signal controller 600. Then, the analog data signals are applied to the corresponding data lines D₁-Dₘ.

The gate driver 400 supplies the gate-on voltage Von to gate lines G₁-Gₙ according to gate control signal CONT1 from the signal controller 600, thereby turning on the switching elements Q connected to the gate lines G₁-Gₙ. Then, the data signals on the data lines D₁-Dₘ are applied to the corresponding pixels PX through the turned-on switching elements Q.

The storage electrode driver 700 supplies the storage electrode signals (Vst) to the storage electrode lines SL according to the storage electrode control signal CONT3 from the signal controller 600. Each storage electrode signal (Vst) has periodic, alternating polarity is relative to the common voltage Vcom.

The difference between the voltage of the data signal applied to the pixel PX and the common voltage Vcom (i.e. the pixel voltage) appears as a voltage of the liquid crystal capacitor Clc. The arrangement of the liquid crystal molecules varies with the magnitude of the pixel voltage to vary the polarization of light that passes through the liquid crystal layer 3. Changes in polarization cause changes in transmittance of light by a polarizer in the display panel assembly 300, and the pixel PX displays the luminance corresponding to the gray level of the image signal DAT.

By repeating the above-described operation in each horizontal period (1H), which is equivalent to one cycle of the horizontal synchronizing signal Hsync and data enable signal DE, the gate-on voltage Von is sequentially provided to all gate lines G₁-Gₙ, and an image of one frame is displayed by supplying the data signals to all pixels PX.

After displaying the image for one frame, the next frame starts and the state of the inversion signal RVS applied to the data driver 500 is controlled to invert the polarity of the data signals from the previous frame ("frame inversion")Herein, the polarity of a data signal flowing through a data line can be inverted according to characteristics of the inversion signal RVS even within one frame (for example: row inversion, dot inversion), or the polarity of the data signal applied to one pixel can be different (for example: column inversion, dot inversion)..

Now the operation of a liquid crystal display according to the exemplary embodiment of the present invention will be described with reference to FIG. 9A and FIG. 9B.

FIG. 9A and FIG. 9B are waveform graphs illustrating driving signals of the liquid crystal display according to the exemplary embodiment of the present invention in an n^{th} frame and an (n+1)^{th} frame for an exemplary pixel PX. Referring to FIG. 9A, the n^{th} frame is displayed as follows. When a gate signal (Vg) is applied to a gate line 121 from the gate driver 400, the liquid crystal capacitor Clc is charged. The pixel electrode voltage Vp increases, changing from the negative polarity (-) to the positive polarity (+). The storage electrode voltage (Vst) is an alternating periodic signal, and the polarity thereof alternates relative to the common voltage Vcom. The gate voltage (Vg) is driven to the gate-on level Von about time 1H before the corresponding data voltages (Vd) are supplied to the data lines for the corresponding pixel row. Therefore, the liquid crystal capacitor Clc is pre-charged for about time 1H to some voltage of appropriate polarity, though perhaps not to the target value. (The precharge takes advantage of the data line voltages for the previous pixel row having the same polarities, although possibly not the same target levels, as for the current row.) Then the data voltages (Vd) for the current row are provided for additional time of about 1H.

Then, about 2H after the gate voltage Vg became Von, the gate voltage returns to the Voff value. Therefore, the pixel electrode voltage Vp for the exemplary pixel being described decrease by a kick-back voltage value (Vkb). The pixel electrode voltage Vp oscillates in a periodic manner according to the oscillation of the storage electrode voltage (Vst). The pixel electrode voltage Vp periodically increases by a value shown as ΔVp in the drawings when the storage electrode voltage (Vst) increases, and then the voltages Vp returns to its original level when the storage electrode voltage (Vst) decreases. The average values Vpp of the pixel electrode voltage Vp increases (Vpp is shown relative to Vcom).

FIG. 9B shows this operation for the pixel in the next frame, when the data line connected to the pixel has negative polarity. The liquid crystal capacitor Clc is charged when the gate-on voltage Von is supplied from gate driver 400 to the gate line 121 as the gate signal Vg. The pixel electrode voltage Vp increases in magnitude and changes from positive (+) to negative (-) polarity. The storage electrode voltage (Vst) alternates periodically, and the polarity thereof changes relative to the common voltage Vcom. The gate voltage (Vg) rises to the gate-on level (Von) about 1H before the corresponding data voltage (Vd) is supplied to the data line. Therefore, the liquid crystal capacitors Clc is pre-charged for about 1H. Afterward, the gate voltage (Vg) stays at Von, and the corresponding data voltage (Vg) is provided for an additional time of about 1H to the gate line.

Then, about 2H after the gate voltage Vg became Von, the gate voltage returns to the Voff value. Therefore, the pixel electrode voltage Vp decreases by as much as a kick-back voltage value (Vkb). The pixel electrode voltage Vp alternates periodically according to the oscillation of the storage electrode voltage (Vst). The pixel electrode voltage Vp periodically increases in magnitude by the ΔVp value when the storage electrode voltage (Vst) decreases, and then the voltages Vp returns to its original level when Vst increases. The average value Vpp of the pixel electrode voltage Vp increases in magnitude.

Thus, both in the case of FIG. 9A (positive polarity) and in the case of FIG. 9B (negative polarity), the difference between the common voltage (Vcom) and the pixel electrode voltage (Vp) increases in magnitude due to the pulses of the storage electrode signal (Vst). The average difference Vpp thus increases in magnitude. Consequently, the gray levels increase. Therefore, both the power consumption in the data driver 500 and the heat generated by the data driver 500 can be reduced because proper pixel voltages can be generated with a lower driving voltage of the data driver 500.

In each frame, when a gate line 121 is driven as shown in FIG. 9A or 9B, one of any two adjacent pixels in the corresponding row has positive polarity and the other one of the two adjacent pixels has negative polarity. Therefore, the data lines for any two adjacent columns have voltages Vst of opposite polarities during each frame. The data line signals are therefore opposite in phase.

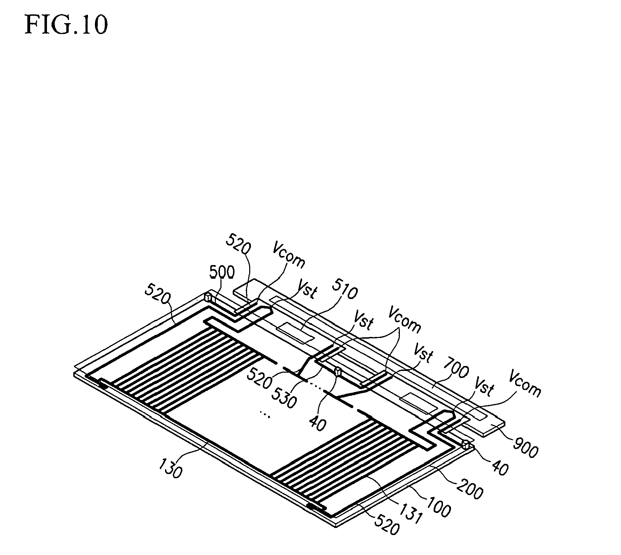

Now a method for supplying the storage voltage signals to a liquid crystal display according to an exemplary embodiment of the present invention will be described with reference to FIG. 10. FIG. 10 is a perspective view illustrating the liquid crystal panel assembly 300 according to the exemplary embodiment. The liquid crystal panel assembly 300 includes a lower panel 100 and an upper panel 200 facing each other, with a liquid crystal layer 3 interposed therebetween.

One side of data driver 500 is connected to the upper portion of the lower panel 100. The other side of the data driver 500 is connected to a printed circuit board (PCB) 900. The gray voltage generator 800 and the storage electrode driver 700 are disposed on the PCB 900. The data driver 500 includes a data driving circuit chip 510 transferring the data voltage (Vd) to data lines 171. Additional wires 520 and 530 are formed around the data driving circuit chip 510The additional wires 520 and 530 include first additional wiring 520 for receiving the storage electrode signals (Vst) and second additional wiring 530 for receiving the common voltage Vcom. One end of the first additional wiring 520 is connected to the storage electrode driver 700. The first additional wiring 520 has a portion on the lower panel 100, and that portion is connected to a storage electrode signal supply line 130 formed on the lower panel 100. The storage electrode signal supply line 130 is parallel to the gate lines 121, and is connected to a plurality of storage electrode lines 131 formed in parallel with data lines 171. The storage electrode signals (Vst) are generated by storage electrode driver 700, and are transferred to the storage electrode line 131 through the first additional wiring 520 and the storage electrode signal supply line 130.

As described above, since the storage electrode signal supply line 130 runs parallel to gate lines 121, that is, in the row direction, the distance between the storage electrode signal supply line 130 and the storage electrode driver 700 is uniform. Therefore, the periodic alternating storage electrode signals (Vst) reach the pixels with a low delay and low distortion.

The common voltage Vcom is supplied through the second additional wiring 530 to the common electrode 270 on the upper panel 200 through a short connector 40.

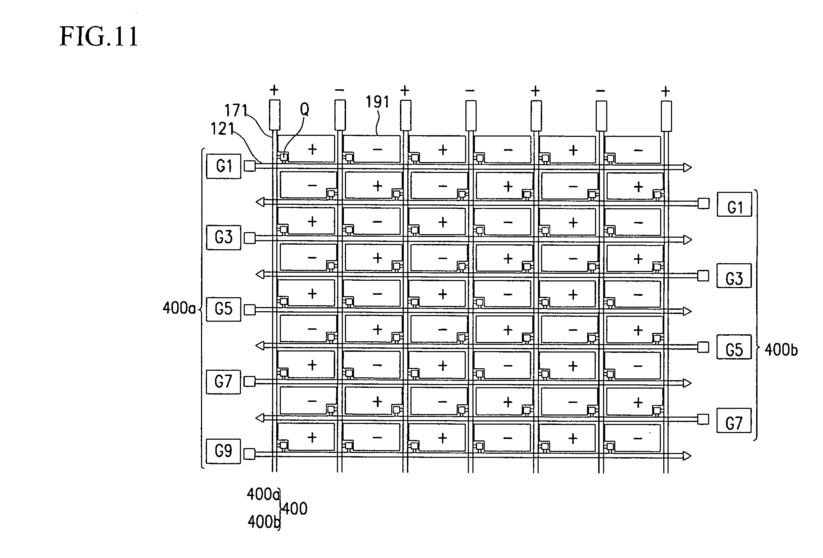

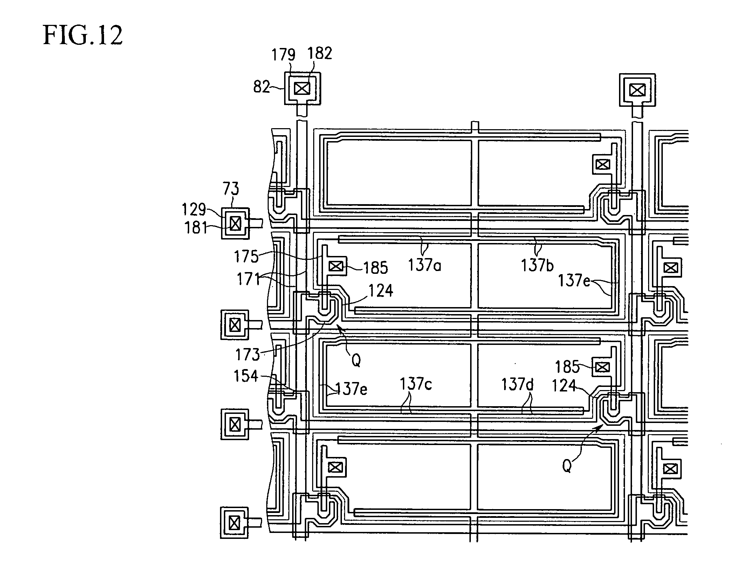

Now a liquid crystal panel assembly according to another embodiment of the present invention will be described with reference to FIG. 11 and FIG. 12.

FIG. 11 is a schematic diagram illustrating switching elements Q and pixel polarities in the liquid crystal panel assembly. Each pixel column is adjacent to two data lines, and the pixels PX in the column alternate with respect to their connection to these data lines. In other words, the switching elements Q of any two consecutive pixels in each column are connected to different ones of these two data lines.

As shown in FIG. 11, if the data driver 500 supplies data voltages of opposite polarities to two adjacent data lines (column inversion), and the polarities remain the same for one frame, then any two adjacent pixels PX in a column or a row have opposite polarities. That is, the apparent inversion on the screen is dot inversion.

More particularly, in addition to inverting the polarity of each data line between different frames, the data driver 500 provides different polarities on any two adjacent data lines D₁-Dₘ during each frame. Since the connections between pixels PX and the corresponding data lines D₁-Dₘ alternate within every column as shown in FIG. 11, the polarity inversion (driver inversion) pattern of the data driver 500 is different from the polarity inversion (apparent inversion) of the pixel electrodes. Although the driver inversion is column inversion, the apparent inversion is 1 × 1 dot inversion.

FIG. 12 is a layout view illustrating one example of a liquid crystal panel assembly shown in FIG. 11. The liquid crystal panel assembly of FIG. 12 includes a lower panel (not shown), an upper panel (not shown), and a liquid crystal layer (not shown) interposed between the two display panels. The layered structure of the liquid crystal panel is about identical to the layered structure of the liquid crystal display shown in FIGs. 3 to 8. Therefore, the layered structure of the liquid crystal panel of FIG. 12 is not shown. The layered structure of the liquid crystal display of FIG. 12 will be described using the same reference numerals as in FIG. 7 and FIG. 8.

The lower panel 100 will now be described. Conductive gate lines 121 and conductive storage electrode lines 131 are formed on the insulation substrate 110. Each gate line 121 includes an end portion 129 and a number of gate electrodes 124, and each of storage electrode lines 131 includes a number of storage electrodes 137. Gate insulating layer 140 is formed on the gate lines 121. Semiconductor islands 154 are formed on the gate insulating layer 140, and ohmic contacts 163 and 165 are formed thereon. Conductive data lines 171 and conductive drain electrodes 175 are formed over the ohmic contacts 163 and 165 and the gate insulating layer 140. Each data line 171 includes end portion 179 for connection to a respective plurality of source electrodes 173. Passivation layer 180 is formed on the data conductors 171 and 175 and the exposed portions of the semiconductor islands 154, and contact holes 181, 182, and 185 are formed in the passivation layer 180 and the gate insulating layer 140. Pixel electrodes 191 and contact liners 81 and 82 are formed on the passivation layer 180. Alignment layer 11 is formed over the pixel electrodes 191, the contact liners 81 and 82, and the passivation layer 180.

Now the upper panel will be described. Light blocking member 220, color filters 230, overcoat 250, common electrode 270, and alignment layer 21 are formed on insulating substrate 210.

The liquid crystal panel assembly shown in FIG. 12 includes thin film transistors each of which includes a gate electrode 124, a region of a semiconductor island 154, a source electrode 173, and a drain electrode 175. The thin film transistors are connected to different data lines in every pixel column.

According to the present invention, the number of data driving circuit chips can be reduced. Also, the power consumption and the heat can be reduced because a wide range of grays can be expressed with low voltages provided by the data driving circuit.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A liquid crystal display comprising:
a substrate;
a plurality of gate lines formed on the substrate;
a plurality of data lines arranged crosswise relative to the gate lines;
a plurality of thin film transistors connected to the gate lines and the data lines;
a plurality of pixel electrodes connected to the thin film transistors, and having a first side formed in parallel with the gate lines and a second side shorter than the first side and adjacent to the first side; and
a plurality of storage electrode lines overlapping with the pixel electrodes,
wherein storage electrode signals applied to the storage electrode line are periodic alternating signals.

2. The liquid crystal display of claim 1, wherein the storage electrode signals applied to adjacent storage electrode lines are opposite in phase.

3. The liquid crystal display of claim 1, wherein the storage electrode lines are substantially parallel to the data lines.

4. The liquid crystal display of claim 1, wherein the storage electrode lines are made of a layer of material, and the data lines are also made of the same layer of material.

5. The liquid crystal display of claim 3, wherein each storage electrode line is adjacent to one or more of the gate lines and has at least one branch substantially parallel to the gate lines.

6. The liquid crystal display of claim 1, wherein the first side is three times longer than the second side.

7. The liquid crystal display of claim 1, further comprising a gate driver connected to the gate lines,
wherein the gate driver is located on the substrate.

8. The liquid crystal display of claim 7, wherein the gate driver includes a first gate driver connected to a first group of the gate lines and a second gate driver connected to a second group of the gate lines.

9. The liquid crystal display of claim 8, wherein the first gate driver and the second gate driver are placed at opposite sides of the substrate.

10. The liquid crystal display of claim 1, wherein thin film transistors adjacent in a column direction are connected to different data lines.

11. The liquid crystal display of claim 1, wherein thin film transistors adjacent in a column direction are connected to different data lines in every two rows.

12. The liquid crystal display of claim 1, further comprising:
a data driver connected to the data lines; and
a plurality of additional wires,
wherein the storage electrode signals are transferred through the additional wires.

13. The liquid crystal display of claim 12, further comprising a storage electrode signal supply line connecting the additional wires and the storage electrode lines and formed in parallel with the gate lines

14. The liquid crystal display of claim 12, further comprising a storage electrode signal supply line connecting the additional wires, wherein the storage electrode lines and formed in parallel with the gate lines.

15. The liquid crystal display of claim 1, wherein the storage electrode signals are reversed every frame.

16. The liquid crystal display of claim 1, wherein polarities of data voltages on adjacent data lines are opposite to each other.

17. The liquid crystal display of claim 15, wherein polarities of data voltages flowing along the data line ar the same, respectively.

18. A liquid crystal display comprising:
a matrix of pixels;
a plurality of gate lines; and
a plurality of data lines arranged crosswise relative to the gate lines;
wherein each of the pixels comprises:
a liquid crystal capacitor, and
a storage capacitor having a first terminal connected to the liquid crystal capacitor, and a second terminal supplied with a storage electrode signal that is a periodic alternating signal,
wherein a region defined by the gate lines and the data lines has a first side extending along the gate lines that is longer than a second side extending along the data lines.

19. The liquid crystal display of claim 18, wherein the first side is three times longer that the second side.

20. The liquid crystal display of claim 18, wherein the voltage of the liquid crystal capacitor changes according to oscillations of the storage electrode signal.
